# EUROPEAN PATENT APPLICATION

(11) **EP 4 064 113 A1**
(43) Date of publication of application: **28.09.2022**
(21) Application number: 20888865.1
(22) Date of filing: 20.11.2020
(51) Int. Cl.: G06K 9/00

(54) **USER INFORMATION DETECTION METHOD AND SYSTEM, AND ELECTRONIC DEVICE**

(30) Priority: 22.11.2019 CN 201911158474
(71) Applicant: ARCSOFT CORPORATION LIMITED, Xihu Dist Hangzhou Zhejiang 310012 (CN)
(72) Inventor: FANG, Sanyong, Hangzhou, Zhejiang 310012 (CN); ZHEN, Haiyang, Hangzhou, Zhejiang 310012 (CN); WANG, Jin, Hangzhou, Zhejiang 310012 (CN)
(74) Representative: Rossi, Ugo
(86) International application number: PCT/CN2020/130631
(87) International publication number: WO 2021/098855

(57) **Abstract**

The present invention discloses user information detection method and system, and an electronic device. The method includes: acquiring a first image (S102); inputting the first image into a first detection model to determine user information of an active user in a target area, where the user information includes at least one of user age information, user gender information, user behavior information, user expression information, user body shape information, or user clothing information (S104); and outputting a detection result according to the user information (S106).

## Description

### Cross-Reference to Related Application

The present application claims priority to Chinese Patent Application No. 201911158474.8, filed to the China National Intellectual Property Administration on November 22, 2019 and entitled "User Information Detection Method and System, and Electronic Device", the disclosure of which is hereby incorporated by reference in its entirety.

### Technical Field

The present invention relates to the technical field of information processing, and specifically, to user information detection method and system, and an electronic device.

### Background

In the related art, as society develops, living standards of people have been greatly improved, and private cars have become one of the most convenient means of transportation for ordinary families to travel, such as commuting on weekdays, picking up of children to and from school, weekend family outings, or the like. However, the news that children are forgotten in the car is very common. If a child is not discovered in time, the child may suffer from syncope due to lack of oxygen in the car, which may even be life-threatening. If it is in the hot summer, the temperature inside the car is very high, so that there is a risk of suffocation. All the above may cause irreparable damage to families.

Most of current methods detect the children in the car through infrared sensors. Then signals are transmitted to a controller of a single-chip microcomputer through digital-to-analog conversion for early warning operation. However, sensors are easily interfered by various heat sources and light sources. Meanwhile, the sensors have poor transmission abilities, and the infrared radiation of the body is easily blocked, which is not easily received by a probe. When an ambient temperature in the summer is close to a body temperature, detection and sensitivity are significantly reduced, sometimes causing malfunctions, as a result, timely treatment cannot be given when the child is in danger, resulting in serious consequences. In addition, such a detection method using the infrared sensors has a high requirement for the mounting position and sensitivity of the sensors, which takes a lot of cost to complete mounting, and an early warning effect is poor.

In view of the above problems, no effective solution has been proposed yet.

### Summary

Embodiments of the present disclosure provide user information detection method and system, and an electronic device, to at least resolve the technical problems in the related art of device malfunction due to environmental impact when the situation of a child inside a vehicle is detected through an infrared sensor.

An aspect of an embodiment of the present invention provides a method for detecting user information. The method includes: acquiring a first image; inputting the first image into a first detection model to determine user information of an active user in a target area, where the user information includes at least one of user age information, user gender information, user behavior information, user expression information, user body shape information, user clothing information; and outputting a detection result according to the user information.

Optionally, after the acquiring a first image, the detection method further includes: extracting image information in the first image, and determining whether there is a first detection object in the first image, where the first detection object includes at least one of a face, a head, a torso, limbs, a body; if there is no first detection object in the first image, deleting the first image; or if there is the first detection object in the first image, cropping a region of interest where the first detection object is located in the first image; and performing image processing on the region of interest in the first image to obtain a first detection image including a qualified first detection object.

Optionally, the performing image processing on the region of interest in the first image to obtain a first detection image including a qualified first detection object includes: performing initial quality evaluation on the region of interest to obtain an image quality evaluation result, where evaluation content of the initial quality evaluation includes at least one of image blur evaluation, angle evaluation, position evaluation, light intensity evaluation; if the image quality evaluation result indicates that a quality of the first detection object is unqualified, stopping detecting the first image; and if the image quality evaluation result indicates that the quality of the first detection object is qualified, using a sub-area where the first detection object is located in the region of interest as the first detection image.

Optionally, after the using a sub-area where the first detection object is located in the region of interest as the first detection image, the detection method further includes: extracting a plurality of feature point coordinates in the first detection image; determining a center point coordinate corresponding to the first detection object in the feature point coordinates; and mapping a center point of the first detection object in the first detection image to a center point corresponding to the first detection object in a preset first standard image according to the center point coordinate of the first detection object, to align the first detection image and the first standard image.

Optionally, the mapping a center point of the first detection object in the first detection image to a center point corresponding to the first detection object in a preset first standard image includes: moving the first detection image above the first standard image taking the center point of the first detection object of the first standard image as a reference; taking the center point of the first detection object as a reference, reducing or enlarging the first detection image according to a scale of the first standard image, to cause the first detection image to have a same size as the first standard image; if an orientation of a detection object of the first detection image is not consistent with an orientation of a detection object of the first standard image, rotating the first detection image, to cause the orientation of the detection object of the first detection image to be consistent with the orientation of the detection object of the first standard image; and determining the center point in the first detection image to map to the center point corresponding to the first detection object in the first standard image after the orientation of the detection object of the first detection image is consistent with the orientation of the detection object of the first standard image.

Optionally, before the acquiring a first image, the detection method further includes: capturing a plurality of user images including different image factors, where the image factors include at least one of an image scenario, illuminance, resolution ratio, user decoration; filtering the plurality of user images to obtain a plurality of image sample sets corresponding to different user categories, where each user image in each image sample set corresponds to an attribute label of the first detection object and category identification of a category to which a user belongs; cropping each image in the plurality of image sample sets to obtain a plurality of first standard images; and inputting the first standard images of the plurality of image sample sets, and the attribute label and the category identification of the first detection object on each first standard image into an initial network model, to train the initial network model, so as to obtain the first detection model.

Optionally, the initial network model includes at least a data layer, a convolutional layer, a pooling layer, an activation layer, a fully connected layer, and an output layer.

Optionally, the step of training the initial network model, so as to obtain the first detection model includes: inputting the first standard images of the plurality of image sample sets, and the attribute label and the category identification of the first detection object on each first standard image into a training network of the initial network model by using the data layer of the initial network model; training the convolutional layer of the initial network model, and extracting data features of the first standard images of the plurality of image sample sets through a preset convolutional parameter, to obtain a first data network feature map, where the convolutional parameter includes at least a first extraction step length, a convolution kernel size, and the number of convolution kernels; training the pooling layer of the initial network model, and performing downsampling on the first data network feature map through a preset pooling parameter to obtain a second data network feature map, where the pooling parameter includes at least a second extraction step length and a pooling size; training the activation layer of the initial network model, and performing nonlinear variation on the second data network feature map, where a manner of performing nonlinear variation includes at least one of the following activation functions: a relu activation function, a prelu activation function, a relu6 activation function; training the fully connected layer of the initial network model, connecting the first data network feature map and the second data network feature map, and according to a preset feature weight, mapping a feature space in a feature map to an identification space through linear conversion, where the identification space is configured to record the attribute label and the category identification of the first detection object; and training the output layer of the initial network model, and outputting a classification result corresponding to each first standard image, where the classification result indicates a category corresponding to the detection object in the first standard image.

Optionally, the step of inputting the first image into the first detection model to determine the user information of the active user in the target area includes: inputting the first image into a data network of the first detection model through the data layer of the first detection model; performing image feature extraction on the first image by using a convolutional layer, a pooling layer, and an activation layer of the first detection model to obtain a multidimensional image output vector; inputting the multidimensional image output vector into different fully connected layer to obtain a user information evaluation result, and inputting the user information evaluation result into the output layer; and outputting the user information by using the output layer of the first detection model.

Optionally, the detection method further includes: inputting the first image to a second detection model to determine detection information of a second detection object in the first image, wherein the second detection object is a reference object of the first detection object.

Optionally, the detection result is outputted based on the detection information of the second detection object and the user information.

Optionally, the user information further includes user gender, a user activity posture, an expression, and a fatigue level of a detection object.

Optionally, an application scenario of the detection method includes at least one of personnel monitoring inside a vehicle or elevator personnel monitoring.

Optionally, whether an alarm prompt is issued is determined according to the detection result.

Another aspect of an embodiment of the present invention further provides a system for detecting user information, including: an image capture apparatus, configured to acquire a first image; an analysis apparatus, configured to input the first image into a first detection model to determine user information of an active user in a target area, where the user information includes at least one of user age information, user gender information, user behavior information, user expression information, user body shape information, or user clothing information; and a result output apparatus, configured to output a detection result according to the user information.

Optionally, the image capture apparatus is a stand-alone camera device, or a camera device that is integrated in a device with the result output apparatus.

Optionally, the detection system further includes: a part determination apparatus, configured to extract image information in the first image after the first image is acquired, and determine whether there is a first detection object in the first image by using a detection object detector, where the first detection object includes at least one of a face, a head, a torso, limbs, or a body; a deleting unit, configured to delete the first image when there is no first detection object in the first image; or an cropping unit, configured to crop a region of interest where the first detection object is located in the first image when there is the first detection object in the first image; and an image processing apparatus, configured to perform image processing on the region of interest in the first image to obtain a first detection image including a qualified first detection object.

Optionally, the image processing apparatus includes: a quality evaluation unit, configured to perform initial quality evaluation on the region of interest to obtain an image quality evaluation result, where evaluation content of the initial quality evaluation includes at least one of image blur evaluation, angle evaluation, position evaluation, or light intensity evaluation; a stopping unit, configured to stop detecting the first image when the image quality evaluation result indicates that a quality of the first detection object is unqualified; and a first determination unit, configured to use a sub-area where the first detection object is located in the region of interest as the first detection image when the image quality evaluation result indicates that the quality of the first detection object is qualified.

Optionally, the detection system further includes: a coordinate extraction apparatus, configured to extract a plurality of feature point coordinates in the first detection image after the sub-area where the first detection object is located in the region of interest is used as the first detection image; a second determination unit, configured to determine a center point coordinate corresponding to the first detection object in the feature point coordinates; a first mapping unit, configured to map a center point of the first detection object in the first detection image to a center point corresponding to the first detection object in a preset first standard image according to the center point coordinate of the first detection object, to align the first detection image and the first standard image.

Optionally, the first mapping unit includes: a first mobile module, configured to move the first detection image above the first standard image taking the center point of the first detection object of the first standard image as a reference; an alignment module, configured to, taking the center point of the first detection object as a reference, reduce or enlarge the first detection image according to a scale of the first standard image, to cause the first detection image to have a same size as the first standard image; a rotation module, configured to, when an orientation of a detection object of the first detection image is not consistent with an orientation of a detection object of the first standard image, rotate the first detection image, to cause the orientation of the detection object of the first detection image to be consistent with the orientation of the detection object of the first standard image; and a first determination module, configured to determine the center point in the first detection image to map to the center point corresponding to the first detection object in the first standard image after the orientation of the detection object of the first detection image is consistent with the orientation of the detection object of the first standard image.

Optionally, the detection system further includes: an image acquisition apparatus, configured to acquire a plurality of user images including different image factors before the first image is acquired, where the image factors include at least one of an image scenario, illuminance, resolution ratio, user decoration; an image filtering apparatus, configured to filter the plurality of user images to obtain a plurality of image sample sets corresponding to different user categories, where each user image in each image sample set corresponds to an attribute label of the first detection object and category identification of a category to which a user belongs; a cropping unit, configured to crop each image in the plurality of image sample sets to obtain a plurality of first standard images; and a training apparatus, configured to input the first standard images of the plurality of image sample sets, and the attribute label and the category identification of the first detection object on each first standard image into an initial network model, to train the initial network model, so as to obtain the first detection model.

Optionally, the initial network model includes at least a data layer, a convolutional layer, a pooling layer, an activation layer, a fully connected layer, and an output layer.

Optionally, the training apparatus includes: a first input unit, configured to input the first standard images of the plurality of image sample sets, and the attribute label and the category identification of the first detection object on each first standard image into a training network of the initial network model by using the data layer of the initial network model; a first training unit, configured to train the convolutional layer of the initial network model, and extract data features of the first standard images of the plurality of image sample sets through a preset convolutional parameter, to obtain a first data network feature map, where the convolutional parameter includes at least a first extraction step length, a convolution kernel size, and the number of convolution kernels; a second training unit, configured to train the pooling layer of the initial network model, and perform downsampling on the first data network feature map through a preset pooling parameter to obtain a second data network feature map, where the pooling parameter includes at least a second extraction step length and a pooling size; a third training unit, configured to train the activation layer of the initial network model, and perform nonlinear variation on the second data network feature map, where a manner of performing nonlinear variation includes at least one of the following activation functions: a relu activation function, a prelu activation function, a relu6 activation function; a fourth training unit, configured to train the fully connected layer of the initial network model, connect the first data network feature map and the second data network feature map, and according to a preset feature weight, map a feature space in a feature map to an identification space through linear conversion, where the identification space is configured to record the attribute label and the category identification of the first detection object; and a fifth training unit, configured to train the output layer of the initial network model, and output a classification result corresponding to each first standard image, where the classification result is used for indicating a category corresponding to the detection object in the first standard image.

Optionally, the analysis apparatus includes: an image processing module, configured to input the first image into a data network of the first detection model through the data layer of the first detection model; a feature extraction unit, configured to perform image feature extraction on the first image by using a convolutional layer, a pooling layer, and an activation layer of the first detection model to obtain a multidimensional image output vector; a third input unit, configured to input the multidimensional image output vector into different fully connected layer to obtain a user information evaluation result, and input the user information evaluation result into the output layer of the first detection model; and a user information output unit, configured to output the user information by using the output layer of the first detection model.

Optionally, the detection system further includes an image input unit. The image input unit is configured to input the first image to a second detection model to determine detection information of a second detection object in the first image. Where, the second detection object is a reference object of the first detection object.

Optionally, the detection result is acquired and outputted based on the detection information of the second detection object and the user information.

Optionally, the user information further includes user gender, a user activity posture, an expression, and a fatigue level of a detection object.

Optionally, an application scenario of the detection system includes at least one of personnel monitoring inside a vehicle or elevator personnel monitoring.

Optionally, whether an alarm prompt is issued is determined according to the detection result.

Another aspect of an embodiment of the present invention further provides an electronic device, including: a processor; and a memory, configured to store an executable instruction of the processor. Where, the processor is configured to execute any of the above method for detecting user information by executing the executable instruction.

Another aspect of an embodiment of the present invention further provides a storage medium. The storage medium includes a stored program. Where, when the program is operated, a device where the storage medium is located is controlled to execute any of the above method for detecting user information.

In an embodiment of the present invention, a first image is first acquired. Then the first image is inputted into a first detection model to determine user information of an active user in a target area. Where, the user information includes at least one of user age information, user gender information, user behavior information, user expression information, user body shape information, user clothing information. A detection result is finally outputted according to the user information. In this embodiment, if the detection method is applied to area monitoring inside a vehicle, the first image inside the vehicle may be used to analyze the user information of personnel in the vehicle. Information such as ages, gender, behaviors, expressions, body shapes, and clothing is analyzed to obtain a detection result related to the personnel in the vehicle. For example, in a case that there is a child forgotten in the vehicle, an alarm prompt may be timely issued according to the detection result, so that the child can be prevented from still being forgotten in the vehicle after a vehicle owner gets off the vehicle. In this way, the probability of danger to the personnel in the vehicle can be reduced. The solution of obtaining the user information by analyzing image content is not affected by the environment, and only needs to ensure that an image capturing device can work normally, so that the probability of device failure can be obviously reduced, and the stability of the detection result can be relatively high. Therefore, the technical problems in the related art of device malfunction due to environmental impact when the situation of the child inside the vehicle is detected through an infrared sensor can be resolved.

### Brief Description of the Drawings

The accompanying drawings described herein are used to provide a further understanding of the present invention, and constitute a part of this application. The exemplary embodiments of the present invention and the description thereof are used to explain the present invention, but do not constitute improper limitations to the present invention. In the drawings:
Fig. 1 is a flowchart of an optional method for detecting user information according to an embodiment of the present invention.
Fig. 2 is a schematic diagram of an optional system for detecting user information according to an embodiment of the present invention.

### Detailed Description of the Embodiments

In order to enable those skilled in the art to better understand the solutions of the disclosure, the technical solutions in the embodiments of the disclosure will be clearly and completely described below in combination with the drawings in the embodiments of the disclosure. It is apparent that the described embodiments are only part of the embodiments of the disclosure, not all the embodiments. Based on the embodiments in the disclosure, all other embodiments obtained by those of ordinary skilled in the art without creative work shall fall within the protection scope of the disclosure.

It is to be noted that terms "first", "second" and the like in the description, claims and the above mentioned drawings of the disclosure are used for distinguishing similar objects rather than describing a specific sequence or a precedence order. It should be understood that the data used in such a way may be exchanged where appropriate, in order that the embodiments of the disclosure described here can be implemented in an order other than those illustrated or described herein. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

According to an embodiment of the present invention, user information detection method is provided. It is to be noted that the steps shown in the flowchart of the accompanying drawings may be executed in a computer system, such as a set of computer-executable instructions, and although a logical sequence is shown in the flowchart, in some cases, the steps shown or described may be executed in a different order than here.

In an embodiment of the present invention, a first image of a to-be-detected area (for example, an internal of a vehicle, an elevator of a shopping mall, or a conference room) is acquired through an image capturing device, and is processed. Detection object information is identified. User information such as the age of a user is analyzed, and the age of the user is determined. Therefore, an alarm prompt is issued timely when personnel in the area are in a dangerous state.

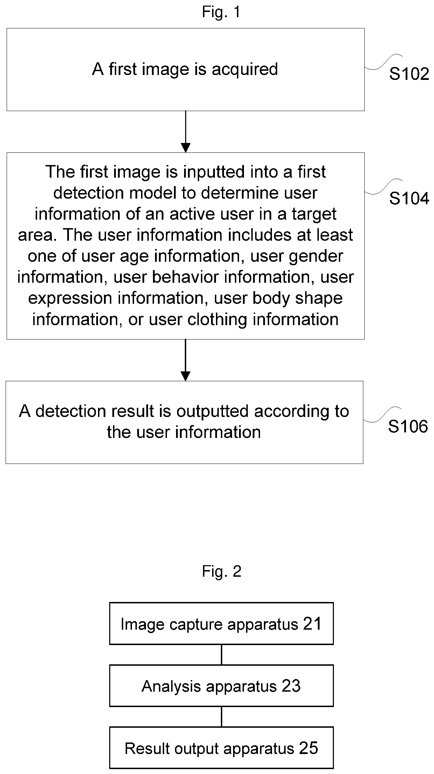

Fig. 1 is a flowchart of an optional method for detecting user information according to an embodiment of the present invention. As shown in Fig. 1, the method includes the following steps.

At step S102, a first image is acquired.

At step S104, the first image is inputted into a first detection model to determine user information of an active user in a target area. Where, the user information includes at least one of user age information, user gender information, user behavior information, user expression information, user body shape information, user clothing information.

Types of the first detection model and the following second detection model that are used in the embodiments of the present invention include, but are not limited to, Convolutional Neural Networks (CNNs), which identify displacement, scaling and other forms of distortion-invariant two-dimensional graphics through the CNNs. Since a feature detection layer of the CNN is learned according to training data, explicit feature extraction is avoided when the CNN is used, but learning is implicitly performed from the training data. In addition, since neuron weights on a same feature mapping surface are the same, a network may learn in parallel, which is also a major advantage of convolutional networks over networks in which neurons are connected to each other. The CNN has unique advantages in image processing based on its special structure of local weight sharing, of which layout is closer to an actual biological neural network. Weight sharing reduces the complexity of the network. In particular, the characteristic that an image of a multidimensional input vector may be directly inputted into the network avoids the complexity of data reconstruction during feature extraction and classification.

At step S106, a detection result is outputted according to the user information.

Through the above steps, the first image may be first acquired. Then the first image is inputted into the first detection model to determine the user information of the active user in the target area. The detection result is finally outputted according to the user information. In this embodiment, if the detection method is applied to area monitoring inside a vehicle, the first image inside the vehicle may be used to analyze the user information of personnel in the vehicle. Information such as ages, gender, behaviors, expressions, body shapes, and clothing is analyzed to obtain a detection result related to the personnel in the vehicle. For example, in a case that there is a child forgotten in the vehicle, an alarm prompt may be timely issued according to the detection result, so that the child can be prevented from still being forgotten in the vehicle after a vehicle owner gets off the vehicle. In this way, the probability of danger to the personnel in the vehicle can be reduced. The solution of obtaining the user information by analyzing image content is not affected by the environment, and only needs to ensure that an image capturing device can work normally, so that the probability of device failure can be obviously reduced, and the stability of the detection result can be relatively high. Therefore, the technical problems in the related art of device malfunction due to environmental impact when the situation of the child inside the vehicle is detected through an infrared sensor can be resolved.

The embodiments of the present invention are described below in detail with reference to the steps. For the first detection model and the second detection model involved in the embodiments of the present invention, the first detection model may be preferentially used for detecting a user, and the second detection model may simultaneously be used for performing auxiliary detection on the user.

The first detection model is described.

In an embodiment of the present invention, the first detection model is pre-trained. The first image taken is analyzed through the first detection model, to obtain the user information including the user age information, the user gender information, the user behavior information, the user expression information, the user body shape information, the user clothing information, and the like.

As an optional embodiment of the present invention, before the first image is acquired, the first detection model is required to be trained. The method includes: capturing a plurality of user images including different image factors, where the image factors include at least one of an image scenario, illuminance, resolution ratio, user decoration; filtering the plurality of user images to obtain a plurality of image sample sets corresponding to different user categories, where each user image in each image sample set corresponds to an attribute label of the first detection object and category identification of a category to which a user belongs; cropping each image in the plurality of image sample sets to obtain a plurality of first standard images; and inputting the first standard images of the plurality of image sample sets, and the attribute label and the category identification of the first detection object on each first standard image into an initial network model, to train the initial network model, so as to obtain the first detection model.

In this embodiment of the present invention, the captured user images may be two-dimensional images or three-dimensional images. The images may be taken from a plurality of angles. The image capturing device (such as a camera) may be mounted in any position of the target area. When a network model is trained, the used images may be images including a plurality of image factors.

In this embodiment of the present invention, schematic description of analyzing user categories is used as user information. For the analysis of the age of the detection object, it is assumed that a apparent attribute of the detection object is used as an analysis result. Since a difference between the detection objects having a similar age is relatively small, and a discrimination ability is poor, ages are divided according to categories, to obtain an accurate category discrimination result so as to meet the application of the present invention. Therefore, the ages may be divided into a plurality of different categories according to apparent ages. For example, personnel are divided into 3 different categories (infants: 0-5 years old, children: 6-15 years old, and others: over 16 years old).

After the division of the categories is determined, a large-scale image training sample database is required to be established. The plurality of user images of different image factors are captured. A multi-label network model (such as a CNN classification model) is trained. Image materials collected through various channels include different scenarios, different illumination, different resolutions, different decorations, and the like. Before training, samples with large angles, blurs, poor illumination condition, and low resolution may be filtered via a terminal or manually filtered by the user. A training sample set includes the above 3 categories. All materials of the 3 categories are guaranteed to be covered and evenly distributed, so as to ensure that each individual category has many to-be-trained user images. Each to-be-trained user image sample is marked with a category label being (0-5 years old: 0; 6-15 years old: 1; over 16 years old: 2). Face detection is used as an example (positioning may also be performed through seats, body limbs, and a torso). Through a series of transformation operations of eye point positioning, translation, rotation and scaling, an image of the first detection object is cropped into a standard multi-channel image (for example, the image is cropped into 60 × 60 color images with RGB channels). In order to expand training samples and enhance the robustness of a training model, a series of operations is performed on the to-be-trained user image sample, such as translation in a horizontal direction or a vertical direction, and stretching at different scales.

The processed training sample set is inputted into the initial network model to perform multi-task classification model training. Layers of the initial network model include a data layer, a convolutional layer, a pooling layer, an activation layer, a fully connected layer, and an output layer. Except for the data layer and the output layer, the input of each layer in the middle is the output of the previous layer, and the output of each layer in the middle is the input of the next layer.

Optionally, a training mode in this embodiment of the present invention includes a gradient descent method and a back propagation algorithm.

As an optional embodiment of the present invention, the step of training the initial network model, so as to obtain the first detection model includes: inputting the first standard images of the plurality of image sample sets, and the attribute label and the category identification of the first detection object on each first standard image into a training network of the initial network model by using the data layer of the initial network model; training the convolutional layer of the initial network model, and extracting data features of the first standard images of the plurality of image sample sets through a preset convolutional parameter, to obtain a first data network feature map, where the convolutional parameter includes at least a first extraction step length, a convolution kernel size, and the number of convolution kernels; training the pooling layer of the initial network model, and performing downsampling on the first data network feature map through a preset pooling parameter to obtain a second data network feature map, where the pooling parameter includes at least a second extraction step length and a pooling size; training the activation layer of the initial network model, and performing nonlinear variation on the second data network feature map, where a manner of performing nonlinear variation includes at least one of the following activation functions: a relu activation function, a prelu activation function, a relu6 activation function; training the fully connected layer of the initial network model, connecting the first data network feature map and the second data network feature map, and according to a preset feature weight, mapping a feature space in a feature map to an identification space through linear conversion, where the identification space is configured to record the attribute label and the category identification of the first detection object; and training the output layer of the initial network model, and outputting a classification result corresponding to each first standard image, where the classification result is used for indicating a category corresponding to the detection object in the first standard image.

That is to say, when the initial network model is trained, the processed first standard image (such as a detection object sample image with a size being 60 × 60) and the attribute label of the first detection object may be inputted into the training network through the data layer. Then, using the convolutional layer, data features are extracted through a set step length, a convolution kernel size, and the number of convolution kernels. Using the pooling layer, downsampling is performed on a feature map at the previous layer through the set step length and a pooling size. Using the activation layer, nonlinear variation is performed on the feature map at the previous layer. In this way, the activation functions such as the relu activation function may be used in this solution. Then, the fully connected layer connects all of the feature maps. The feature space is mapped to the identification space through linear conversion according to weights, and the fully connected layer is followed by the relu activation function. Finally, classification and regression is performed on the feature map through the output layer. Optionally, in this embodiment of the present invention, a softmax function is used as a category classification.

The initial network model is continuously trained through the classified user images and the attribute label of the first detection object, so that the analysis accuracy of the network model can be continuously enhanced. Image types and various image content faced by the network model are expanded to prepare for the subsequent shooting of the first image and the analysis of the first image.

At a stage of training the network model, all of the training samples are inputted to the initial network model (such as the CNN), and a difference between an output result and an actual label is calculated according to a loss function. This process is called as "forward transfer". Then, according to the difference between the output result and the actual label, a degree of error of initial network model parameters is determined, and the model parameters are updated, so that neural network learning is performed. This process is called as "backward transfer". By adjusting a weight value of each layer in the initial network model, a difference between an output value of the model and an actual sample label value is smaller and smaller, until the output value of the network model is consistent with the actual sample label value or the difference is maintained minimum and not changed, and then the required first detection model is finally obtained.

Optionally, in this embodiment of the present invention, when the user age in the user information is calculated, a cost function of age error is Loss=L_Age. Backpropagation is performed according to the Loss, and the parameters of the network model are adjusted until convergence.

For each application scenario, such as an area inside a vehicle, performing fine-tuned training on the above converged network by using materials of an in-vehicle scenario, and the marking and cropping of the materials are the same as the above operation. The above general network model is fine-tuned by using materials of an actual application scenario. The network keeps the parameters of the previously shared feature extraction layer (referring to a network layer in front of the fully connected layer) unchanged. The learning rate of the fully connected layer is not 0. In this way, new parameters of the fine-tuned training fully connected layer may be continuously obtained through learning. Therefore, a higher accuracy can be obtained via iteration training. Where, a method for maintaining the parameters unchanged is to set the learning rate of the corresponding layer to 0.

Through fine-tuned training, in the case of a small amount of materials, materials of other scenarios may be used as pre-training for training a feature extractor. Then, the small amount of materials is used to fine-tune to achieve faster convergence speed and higher accuracy.

Through the above implementations, if the first detection model is well trained, the first detection model may be applied to various actual operation environments.

Next, for the second detection model.

The second detection model may be understood as a model that is trained by the reference object of the first detection object. The second detection model may assist in determining information of the detection object. For example, vehicle seats, seat backs, clothes in the vehicle are detected, so as to assist in determining the user information.

In this embodiment of the present invention, the body and seats may be detected through deep learning to determine whether it is a child or an adult solution. During determination, the method may include: inputting the first image into the second detection network (such as a seat detection network, a seat back detection network, or a clothes detection network), and outputting a position detection result of the seats and/or the seat backs; inputting the image into the first detection network (a body detection network), and determining whether the image includes the body and outputting a body detection result; and determining, according to the body detection result, it is a child or an adult by combining with the position detection result of the seats and/or the seat backs.

The detection of the seats and/or the seat backs may be used for assisting in determining the body shape of the body, a specific area where the head is located, or the like, so that interference of randomly placed clothes is eliminated, and the accuracy of detection is enhanced.

After the first detection model and the second detection model are obtained, a newly captured image may be inputted into the model for real-time detection, analysis and determination, so as to obtain the detection result.

At step S102, the first image is acquired.

As an optional embodiment of the present invention, after the first image is acquired, the detection method further includes: extracting image information in the first image, and determining whether there is the first detection object in the first image by using a detection object detector, where the first detection object includes at least one of a face, a head, a torso, limbs, or a body; if there is no first detection object in the first image, deleting the first image; or if there is the first detection object in the first image, cropping a region of interest where the first detection object is located in the first image; and performing image processing on the region of interest in the first image to obtain a first detection image including a qualified first detection object.

The above region of interest may refer to a region after filtering out images not including a object, and the region where the object is located in the images is mainly detected.

In this embodiment of the present invention, the first image may be obtained by using taking an image through an RGB camera, a shooting module, or an infrared camera, etc. Extracted image information may include, but not limited to, RGB color information and depth information. A rate of identification can be effectively increased by identifying color information of a color channel of a detection object image. That is to say, the accuracy of attributive analysis of the detection object is enhanced.

In this application, during detection, detection may be performed on adults, children, or the elderly. A detection mode is diversified, and includes performing preliminary detection on the body shape to determine whether it is a child or an adult. Alternatively, through age group or height detection, whether it is a child may be determined. Alternatively, through behavioral information such as limbs, action frequency may assist in determining whether it is a child. In addition, gender may also be determined through the size and color of clothes, and whether it is a child is determined. Types of objects are determined comprehensively through various information.

Optionally, a region where the first detection object is located in the region of interest in the first image is detected by using a detection object detector or a detection object determination model, so that the first image without detection object is excluded, and a rectangle including the detection object or other regular detection object images may be obtained.

In this embodiment of the present invention, the performing image processing on the region of interest in the first image to obtain a first detection image including a qualified first detection object includes: performing initial quality evaluation on the region of interest to obtain an image quality evaluation result, where evaluation content of the initial quality evaluation includes at least one of image blur evaluation, angle evaluation, position evaluation, or light intensity evaluation; if the image quality evaluation result indicates that a quality of the first detection object is unqualified, stopping detecting the first image; and if the image quality evaluation result indicates that the quality of the first detection object is qualified, using a sub-area where the first detection object is located in the region of interest as the first detection image.

In the above embodiment, detection object quality evaluation is performed on a rectangular region detected by the detection object, and the quality of the detection objects with blurs, large angles, small sizes, serious deviation of detection object frames, and insufficient illumination is determined to be unqualified. An unqualified state is returned to the first detection object of which evaluation result is unqualified, and detection is stopped. For the first detection object of which evaluation result is qualified, a next step of calculation is executed.

As an optional embodiment of the present invention, after a sub-area where the first detection object is located in the region of interest is used as the first detection image, the detection method further includes: extracting a plurality of feature point coordinates in the first detection image; determining a center point coordinate corresponding to the first detection object in the feature point coordinates, for example, the first detection object may include eyes, a mouth, a torso, and limbs; and mapping a center point of the first detection object in the first detection image to a center point corresponding to the first detection object in a preset first standard image according to the center point coordinate of the first detection object, to align the first detection image and the first standard image.

That is to say, a contour and a key point coordinate of the first detection object may be obtained through feature point positioning. The center point of the first detection object may include, but not limited to, an eye center point, a mouth corner point, an eye corner point, a nose tip center point, a torso center part, and a limb center part. A used feature point positioning solution may be obtained based on a landmark library.

In this application, in order to enhance the calculation accuracy of each center point coordinate (such as the eye center point, the mouth corner point, the eye corner point, the nose tip center point, the torso center part, and the limb center part), auxiliary positioning may be performed on information around the center point. For example, in order to enhance the calculation accuracy of the eye center point coordinate, the eye center point coordinate may be obtained by weighting upper, lower, left, and right parts of the eye and the center point of the eye. Definitely, the positioned center point of the eye may also be used, separately.

Through the above embodiment, feature point positioning is performed on a screened detection object image, to obtain the center point coordinate of the first detection object. Then, center points of a to-be-detected object image and center points of the first detection object in a standard detection object image may be adjusted to a position corresponding to the standard detection object image through affine transformation alignment and adjustment (mainly through a series of transformations such as moving, scaling, flipping, and rotating). A three-channel color map having a same size as the training sample is obtained through affine transformation.

In this embodiment of the present invention, the mapping a center point of the first detection object in the first detection image to a center point corresponding to the first detection object in a preset first standard image includes: moving the first detection image above the first standard image taking the center point of the first detection object of the first standard image as a reference; taking the center point of the first detection object as a reference, reducing or enlarging the first detection image according to a scale of the first standard image, to cause the first detection image to have a same size as the first standard image; if an orientation of a detection object of the first detection image is not consistent with an orientation of a detection object of the first standard image, rotating the first detection image, to cause the orientation of the detection object of the first detection image to be consistent with the orientation of the detection object of the first standard image; and determining the center point in the first detection image to map to the center point corresponding to the first detection object in the preset first standard image after the orientation of the detection object of the first detection image is consistent with the orientation of the detection object of the first standard image.

At step S104, the first image is inputted into a first detection model to determine user information of an active user in a target area. Where, the user information includes at least one of user age information, user gender information, user behavior information, user expression information, user body shape information, user clothing information.

Optionally, the step of inputting the first image into the first detection model to determine the user information of the active user in the target area includes: inputting the first image into a data network of the first detection model through the data layer of the first detection model; performing image feature extraction on the first image by using a convolutional layer, a pooling layer, and an activation layer of the first detection model to obtain a multidimensional image output vector; inputting the multidimensional image output vector into different fully connected layer to obtain a user information evaluation result, and inputting the user information evaluation result into the output layer; and outputting the user information by using the output layer of the first detection model. Where, the user information includes at least one of user age information, user gender information, user behavior information, user expression information, user body shape information, user clothing information.

In this embodiment of the present invention, an obtained multi-channel color first image is inputted into a pre-trained first detection model for calculation. A sequence of a network structure may be the data layer -> N group layers -> K fully connected layers + output layer, where N is greater than or equal to 1. Each group layer includes a convolutional layer, a pooling layer, and an activation layer. The multi-channel color first image is inputted into a feature extraction layer of the first detection model, to obtain a multidimensional output vector. The multidimensional output vector is inputted into different fully connected layers of the neural network, to obtain an output result of a category.

In this embodiment of the present invention, in addition to identifying the category of the user in the area, the gender, behaviors, and expressions of the user may further be identified. For example, whether the user is sleepy during driving is analyzed, if so, a danger prompt can be issued timely on an express way, so that danger caused by fatigue when the user drives for a long time can be prevented.

At step S106, a detection result is outputted according to the user information.

Optionally, an application scenario of the method for detecting user information in this embodiment of the present invention includes at least one of personnel monitoring inside a vehicle or elevator personnel monitoring.

Taking personnel monitoring inside the vehicle as an example, detection object image data of a passenger in a vehicle may be acquired by using an image capturing device (such as a high-definition camera mounted in the vehicle). The detection object image data are inputted into the pre-trained first detection model. Detection object category information is outputted and returned to a vehicle system according to an analysis result. In this way, the vehicle system may intelligently adjust system parameters, and a driver may make reasonable decisions according to a system prompt during driving and parking.

In this embodiment of the present invention, the detection method further includes: inputting the first image to a second detection model to determine detection information of a second detection object in the first image. Where, the second detection object is a reference object of the first detection object.

Optionally, the detection result is outputted based on the detection information of the second detection object and the user information.

Optionally, after the detection result is obtained, whether the alarm prompt is issued may be determined according to the detection result.

Taking monitoring of a child in an elevator as an example, a detection object image entering the elevator may be acquired by a terminal capturing device mounted in the elevator. Ages are analyzed through the detection object image. The obtained age information is returned to an elevator control system. If there is only a child in the elevator without an adult, alarm information is issued according to an alarm apparatus. Therefore, danger to the child taking the elevator alone can be effectively prevented.

In this embodiment of the present invention, the method is not only applicable to scenarios including personnel monitoring inside the vehicle and elevator personnel monitoring, but also applicable to other scenarios, such as an elementary school bus and a conference room.

In this embodiment of the present invention, whether there is a child inside the vehicle is detected through a network model of deep learning. Whether a child is in danger is determined according to a detection result when a vehicle door is opened. Therefore, a situation that a child is forgotten in a vehicle can be effectively avoided, so as to avoid such unintentional tragedies. In addition, when a child is detected in a vehicle, a signal may be actively transmitted to cause a vehicle system to play music suitable for children and give a safety speed limit prompt or a window state prompt, so that a driver may be helped to make a reasonable decision.

Fig. 2 is a schematic diagram of an optional system for detecting user information according to an embodiment of the present invention. As shown in Fig. 2, the detection system may include an image capture apparatus 21, an analysis apparatus 23, and a result output apparatus 25. Where,

The image capture apparatus 21 is configured to acquire a first image.

The analysis apparatus 23 is configured to input the first image into a first detection model to determine user information of an active user in a target area. Where, the user information includes at least one of user age information, user gender information, user behavior information, user expression information, user body shape information, user clothing information.

The result output apparatus 25 is configured to output a detection result according to the user information.

According to the system for detecting user information, the first image is acquired by using the image capture apparatus 21. Then the first image is inputted into the first detection model through the analysis apparatus 23, to determine the user information of the active user in the target area. Where, the user information includes at least one of the user age information, the user gender information, the user behavior information, the user expression information, the user body shape information, the user clothing information. The detection result is finally outputted based on the user information by using the result output apparatus 25. In this embodiment, if the detection method is applied to area monitoring inside a vehicle, the first image inside the vehicle may be used to analyze the user information of personnel in the vehicle. Information such as ages, gender, behaviors, expressions, body shapes, and clothing is analyzed to obtain a detection result related to the personnel in the vehicle. For example, in a case that there is a child forgotten in the vehicle, an alarm prompt may be timely issued according to the detection result, so that the child can be prevented from still being forgotten in the vehicle after a vehicle owner gets off the vehicle. In this way, the probability of danger to the personnel in the vehicle can be reduced. The solution of obtaining the user information by analyzing image content is not affected by the environment, and only needs to ensure that an image capturing device can work normally, so that the probability of device failure can be obviously reduced, and the stability of the detection result can be relatively high. Therefore, the technical problems in the related art of device malfunction due to environmental impact when the situation of the child inside the vehicle is detected through an infrared sensor can be resolved.

Optionally, the image capture apparatus is a stand-alone camera device, or a camera device that is integrated in a device with the result output apparatus.

Alternatively and optionally, the detection system further includes: a part determination apparatus, configured to extract image information in the first image after the first image is acquired, and determine whether there is a first detection object in the first image by using a detection object detector, where the first detection object includes at least one of a face, a head, a torso, limbs, or a body; a deleting unit, configured to delete the first image when there is no first detection object in the first image; or an cropping unit, configured to crop a region of interest where the first detection object is located in the first image when there is the first detection object in the first image; and an image processing apparatus, configured to perform image processing on the region of interest in the first image to obtain a first detection image including a qualified first detection object.

As an optional embodiment of the present invention, the image processing apparatus includes: a quality evaluation unit, configured to perform initial quality evaluation on the region of interest to obtain an image quality evaluation result, where evaluation content of the initial quality evaluation includes at least one of image blur evaluation, angle evaluation, position evaluation, or light intensity evaluation; a stopping unit, configured to stop detecting the first image when the image quality evaluation result indicates that a quality of the first detection object is unqualified; and a first determination unit, configured to use a sub-area where the first detection object is located in the region of interest as the first detection image when the image quality evaluation result indicates that the quality of the first detection object is qualified.

Optionally, the detection system further includes: a coordinate extraction apparatus, configured to extract a plurality of feature point coordinates in the first detection image after the sub-area where the first detection object is located in the region of interest is used as the first detection image; a second determination unit, configured to determine a center point coordinate corresponding to the first detection object in the feature point coordinates, for example, the first detection object may include eyes, a mouth, a torso, and limbs; a first mapping unit, configured to map a center point of the first detection object in the first detection image to a center point corresponding to the first detection object in a preset first standard image according to the center point coordinate of the first detection object, to align the first detection image and the first standard image.

In this embodiment of the present invention, the first mapping unit includes: a first mobile module, configured to move the first detection image above the first standard image taking the center point of the first detection object of the first standard image as a reference; an alignment module, configured to, taking the center point of the first detection object as a reference, reduce or enlarge the first detection image according to a scale of the first standard image, to cause the first detection image to have a same size as the first standard image; a rotation module, configured to, when an orientation of a detection object of the first detection image is not consistent with an orientation of a detection object of the first standard image, rotate the first detection image, to cause the orientation of the detection object of the first detection image to be consistent with the orientation of the detection object of the first standard image; and a first determination module, configured to determine the center point in the first detection image to map to the center point corresponding to the first detection object in the preset first standard image after the orientation of the detection object of the first detection image is consistent with the orientation of the detection object of the first standard image.

Optionally, the detection system further includes: an image acquisition apparatus, configured to acquire a plurality of user images including different image factors before the first image is acquired, where the image factors include at least one of an image scenario, illuminance, resolution ratio, user decoration; an image filtering apparatus, configured to filter the plurality of user images to obtain a plurality of image sample sets corresponding to different user categories, where each user image in each image sample set corresponds to an attribute label of the first detection object and category identification of a category to which a user belongs; a cropping unit, configured to crop each image in the plurality of image sample sets to obtain a plurality of first standard images; and a training apparatus, configured to input the first standard images of the plurality of image sample sets, and the attribute label and the category identification of the first detection object on each first standard image into an initial network model, to train the initial network model, so as to obtain the first detection model.

Optionally, the initial network model includes at least a data layer, a convolutional layer, a pooling layer, an activation layer, a fully connected layer, and an output layer.

Alternatively and optionally, the training apparatus includes: a first input unit, configured to input the first standard images of the plurality of image sample sets, and the attribute label and the category identification of the first detection object on each first standard image into a training network of the initial network model by using the data layer of the initial network model; a first training unit, configured to train the convolutional layer of the initial network model, and extract data features of the first standard images of the plurality of image sample sets through a preset convolutional parameter, to obtain a first data network feature map, where the convolutional parameter includes at least a first extraction step length, a convolution kernel size, and the number of convolution kernels; a second training unit, configured to train the pooling layer of the initial network model, and perform downsampling on the first data network feature map through a preset pooling parameter to obtain a second data network feature map, where the pooling parameter includes at least a second extraction step length and a pooling size; a third training unit, configured to train the activation layer of the initial network model, and perform nonlinear variation on the second data network feature map, where a manner of performing nonlinear variation includes at least one of the following activation functions: a relu activation function, a prelu activation function, a relu6 activation function; a fourth training unit, configured to train the fully connected layer of the initial network model, connect the first data network feature map and the second data network feature map, and according to a preset feature weight, map a feature space in a feature map to an identification space through linear conversion, where the identification space is configured to record the attribute label and the category identification of the first detection object; and a fifth training unit, configured to train the output layer of the initial network model, and output a classification result corresponding to each first standard image, where the classification result is used for indicating a category corresponding to the detection object in the first standard image.

Optionally, the analysis apparatus includes: an image processing module, configured to input the first image into a data network of the first detection model through a data layer of the first detection model; a feature extraction unit, configured to perform image feature extraction on the first image by using a convolutional layer, a pooling layer, and an activation layer of the first detection model to obtain a multidimensional image output vector; a third input unit, configured to input the multidimensional image output vector into different fully connected layer to obtain a user information evaluation result, and input the user information evaluation result into the output layer; and a user information output unit, configured to output the user information by using the output layer of the first detection model, where the user information includes at least one of user age information, user gender information, user behavior information, user expression information, user body shape information, user clothing information.

Optionally, the detection system further includes an image input unit. The image input unit is configured to input the first image to a second detection model to determine detection information of a second detection object in the first image. Where, the second detection object is a reference object of the first detection object.

Optionally, the detection result is acquired and outputted based on the detection information of the second detection object and the user information.

Optionally, the user information further includes user gender, a user activity posture, an expression, and a fatigue level of a detection object.

Optionally, an application scenario of the detection system includes at least one of personnel monitoring inside a vehicle or elevator personnel monitoring.

Optionally, whether an alarm prompt is issued is determined according to the detection result.

Another aspect of an embodiment of the present invention further provides an electronic device. The electronic device includes: a processor; and a memory, configured to store an executable instruction of the processor. Where, the processor is configured to execute any of the above method for detecting user information by executing the executable instruction.

Another aspect of an embodiment of the present invention further provides a storage medium. The storage medium includes a stored program. Where, when the program is operated, a device where the storage medium is located is controlled to execute any of the above method for detecting user information.

This application further provides a computer program product. When being executed on a data processing device, the computer program product adapts to execute a program initialized with the following method steps: acquiring a first image; inputting the first image into a first detection model to determine user information of an active user in a target area, where the user information includes at least one of user age information, user gender information, user behavior information, user expression information, user body shape information, user clothing information; and outputting a detection result according to the user information.

The serial numbers of the foregoing embodiments of the present invention are merely for description, and do not represent the superiority or inferiority of the embodiments.

In the above embodiments of the present invention, the description of the embodiments has its own focus. For parts that are not described in detail in a certain embodiment, reference may be made to related descriptions of other embodiments.

In the several embodiments provided in this application, it should be understood that, the disclosed technical content can be implemented in other ways. Where, the apparatus embodiments described above are merely illustrative. For example, the division of the units may be a logical function division, and there may be other divisions in actual implementation. For example, a plurality of units or components may be combined or integrated into another system, or some features can be ignored, or not implemented. In addition, the displayed or discussed mutual coupling or direct coupling or communication connection may be indirect coupling or communication connection through some interfaces, units or modules, and may be in electrical or other forms.

The units described as separate components may or may not be physically separated. The components displayed as units may or may not be physical units, that is, the components may be located in one place, or may be distributed on the plurality of units. Part or all of the units may be selected according to actual requirements to achieve the purposes of the solutions of this embodiment.

In addition, the functional units in the various embodiments of the present invention may be integrated into one processing unit, or each unit may exist alone physically, or two or more than two units may be integrated into one unit. The above integrated unit can be implemented in the form of hardware, or can be implemented in the form of a software functional unit.

If the integrated unit is implemented in the form of the software functional unit and sold or used as an independent product, it can be stored in a computer readable storage medium. Based on this understanding, the technical solutions of the present invention essentially or the parts that contribute to the prior art, or all or part of the technical solutions can be embodied in the form of a software product. The computer software product is stored in a storage medium, including a plurality of instructions for causing a computer device (which may be a personal computer, a server, or a network device, and the like) to execute all or part of the steps of the method described in the various embodiments of the present invention. The foregoing storage medium includes various media that can store program codes, such as a USB flash disk, a Read-Only Memory (ROM), a Random Access Memory (RAM), a mobile hard disk, a magnetic disk, or an optical disk.

The above description is merely preferred implementations of the present disclosure, and it should be noted that persons of ordinary skill in the art may also make several improvements and refinements without departing from the principle of the present disclosure, and it should be considered that these improvements and refinements shall all fall within the protection scope of the present disclosure.

### Industrial Applicability

The solutions provided in the embodiments of this application may implement a detection of user information. The technical solution provided in the embodiment of this application is applicable to an image detection apparatus inside a spatial area. A first image of a to-be-detected area (for example, an internal of a vehicle, an elevator of a shopping mall, or a conference room) is captured by using an image capturing device, and is processed. Detection object information is identified. User information such as the age of a user is analyzed, and the age of a user is determined. Therefore, an alarm prompt is issued timely when personnel in a area is in a dangerous state. In this application, the solution of obtaining the user information by analyzing image content is not affected by the environment, and only needs to ensure that an image capturing device can work normally, so that the probability of device failure can be obviously reduced, and the stability of the detection result can be relatively high. Therefore, the technical problems in the related art of device malfunction due to environmental impact when the situation of a child inside a vehicle is detected by using an infrared sensor can be resolved. According to this application, an image taken by each image capturing device in a certain spatial area may be automatically analyzed. Whether personnel in the area is in danger is analyzed, to accurately identify information of the personnel in the area, so that a danger perception level can be increased, and the probability of the personnel in a dangerous state can be reduced. In this way, the situation that a child is forgotten in a vehicle can be effectively avoided, so as to avoid such unintentional tragedies.

## Claims

1. A user information detection method, comprising:
acquiring a first image;
inputting the first image into a first detection model to determine user information of an active user in a target area, wherein the user information comprises at least one of user age information, user gender information, user behavior information, user expression information, user body shape information, user clothing information; and
outputting a detection result according to the user information.

2. The detection method as claimed in claim 1, wherein after the acquiring a first image, the method further comprises:
extracting image information in the first image, and determining whether there is a first detection object in the first image, wherein the first detection object comprises at least one of a face, a head, a torso, limbs, a body;
if there is no first detection object in the first image, deleting the first image; or
if there is the first detection object in the first image, cropping a region of interest where the first detection object is located in the first image; and
performing image processing on the region of interest in the first image to obtain a first detection image comprising a qualified first detection object.

3. The detection method as claimed in claim 2, wherein the performing image processing on the region of interest in the first image to obtain a first detection image comprising a qualified first detection object comprises:
performing initial quality evaluation on the region of interest to obtain an image quality evaluation result, wherein evaluation content of the initial quality evaluation comprises at least one of image blur evaluation, angle evaluation, position evaluation, light intensity evaluation;
if the image quality evaluation result indicates that a quality of the first detection object is unqualified, stopping detecting the first image; and
if the image quality evaluation result indicates that the quality of the first detection object is qualified, using a sub-area where the first detection object is located in the region of interest as the first detection image.

4. The detection method as claimed in claim 3, wherein after the using a sub-area where the first detection object is located as the first detection image, the method further comprises:
extracting a plurality of feature point coordinates in the first detection image;
determining a center point coordinate corresponding to the first detection object in the feature point coordinates; and
mapping a center point of the first detection object in the first detection image to a center point corresponding to the first detection object in a preset first standard image according to the center point coordinate of the first detection object, to align the first detection image and the first standard image.

5. The detection method as claimed in claim 4, wherein the mapping a center point of the first detection object in the first detection image to a center point corresponding to the first detection object in a preset first standard image comprises:
moving the first detection image above the first standard image taking the center point of the first detection object of the first standard image as a reference;
taking the center point of the first detection object as a reference, reducing or enlarging the first detection image according to a scale of the first standard image, to cause the first detection image to have a same size as the first standard image;
if an orientation of a detection object of the first detection image is not consistent with an orientation of a detection object of the first standard image, rotating the first detection image, to cause the orientation of the detection object of the first detection image to be consistent with the orientation of the detection object of the first standard image; and
determining the center point in the first detection image to map to the center point corresponding to the first detection object in the first standard image after the orientation of the detection object of the first detection image is consistent with the orientation of the detection object of the first standard image.

6. The detection method as claimed in claim 1, wherein before the acquiring a first image, the method further comprises:
capturing a plurality of user images comprising different image factors, wherein the image factors comprise at least one of an image scenario, illuminance, resolution ratio, user decoration;
filtering the plurality of user images to obtain a plurality of image sample sets corresponding to different user categories, wherein each user image in each image sample set corresponds to an attribute label of the first detection object and category identification of a category to which a user belongs;
cropping each image in the plurality of image sample sets to obtain a plurality of first standard images; and
inputting the first standard images of the plurality of image sample sets, and the attribute label and the category identification of the first detection object on each first standard image into an initial network model, to train the initial network model, so as to obtain the first detection model.

7. The detection method as claimed in claim 6, wherein the initial network model comprises at least a data layer, a convolutional layer, a pooling layer, an activation layer, a fully connected layer, and an output layer.

8. The detection method as claimed in claim 7, wherein the step of training the initial network model, so as to obtain the first detection model comprises:
inputting the first standard images of the plurality of image sample sets, and the attribute label and the category identification of the first detection object on each first standard image into a training network of the initial network model by using the data layer of the initial network model;
training the convolutional layer of the initial network model, and extracting data features of the first standard images of the plurality of image sample sets through a preset convolutional parameter, to obtain a first data network feature map, wherein the convolutional parameter comprises at least a first extraction step length, a convolution kernel size, and the number of convolution kernels;
training the pooling layer of the initial network model, and performing downsampling on the first data network feature map through a preset pooling parameter to obtain a second data network feature map, wherein the pooling parameter comprises at least a second extraction step length and a pooling size;
training the activation layer of the initial network model, and performing nonlinear variation on the second data network feature map, wherein a manner of performing nonlinear variation comprises at least one of the following activation functions: a relu activation function, a prelu activation function, a relu6 activation function;
training the fully connected layer of the initial network model, connecting the first data network feature map and the second data network feature map, and according to a preset feature weight, mapping a feature space in a feature map to an identification space through linear conversion, wherein the identification space is configured to record the attribute label and the category identification of the first detection object; and
training the output layer of the initial network model, and outputting a classification result corresponding to each first standard image, wherein the classification result indicates a category corresponding to the detection object in the first standard image.

9. The detection method as claimed in claim 8, wherein the step of inputting the first image into the first detection model to determine the user information of the active user in the target area comprises:
inputting the first image into a data network of the first detection model through the data layer of the first detection model;
performing image feature extraction on the first image by using a convolutional layer, a pooling layer, and an activation layer of the first detection model to obtain a multidimensional image output vector;
inputting the multidimensional image output vector into different fully connected layer to obtain a user information evaluation result, and inputting the user information evaluation result into the output layer; and
outputting the user information by using the output layer of the first detection model.

10. The detection method as claimed in claim 1, wherein the detection method further comprising: inputting the first image to a second detection model to determine detection information of a second detection object in the first image, wherein the second detection object is a reference object of the first detection object.

11. The detection method as claimed in claim 10, wherein the detection result is outputted based on the detection information of the second detection object and the user information.

12. The detection method as claimed in any of claims of 1 to 11, wherein an application scenario of the detection method comprises at least one of personnel monitoring inside a vehicle or elevator personnel monitoring.

13. The detection method as claimed in any of claims of 1 to 11, wherein whether an alarm prompt is issued is determined according to the detection result.

14. A user information detection system, comprising:
an image capture apparatus, configured to acquire a first image;
an analysis apparatus, configured to input the first image into a first detection model to determine user information of an active user in a target area, wherein the user information comprises at least one of user age information, user gender information, user behavior information, user expression information, user body shape information, or user clothing information; and
a result output apparatus, configured to output a detection result according to the user information.

15. The detection system as claimed in claim 14, comprising:
a part determination apparatus, configured to extract image information in the first image after the first image is acquired, and determine whether there is a first detection object in the first image by using a detection object detector, wherein the first detection object comprises at least one of a face, a head, a torso, limbs, or a body;
a deleting unit, configured to delete the first image when there is no first detection object in the first image; or
an cropping unit, configured to crop a region of interest where the first detection object is located in the first image when there is the first detection object in the first image; and
an image processing apparatus, configured to perform image processing on the region of interest in the first image to obtain a first detection image comprising a qualified first detection object.

16. The detection system as claimed in claim 15, wherein the image processing apparatus comprises:
a quality evaluation unit, configured to perform initial quality evaluation on the region of interest to obtain an image quality evaluation result, wherein evaluation content of the initial quality evaluation comprises at least one of image blur evaluation, angle evaluation, position evaluation, or light intensity evaluation;
a stopping unit, configured to stop detecting the first image when the image quality evaluation result indicates that a quality of the first detection object is unqualified; and
a first determination unit, configured to use a sub-area where the first detection object is located in the region of interest as the first detection image when the image quality evaluation result indicates that the quality of the first detection object is qualified.

17. The detection system as claimed in claim 14, further comprising: an image input unit, configured to input the first image to a second detection model to determine detection information of a second detection object in the first image, wherein the second detection object is a reference object of the first detection character.

18. The detection system as claimed in claim 17, wherein the detection result is outputted based on the detection information of the second detection object and the user information.

19. An electronic device, comprising:
a processor; and
a memory, configured to store an executable instruction of the processor, wherein
the processor is configured to execute the method for detecting user information as claimed in any of claims 1 to 13 by executing the executable instruction.

20. A storage medium, comprising a stored program, wherein, when the program is operated, a device where the storage medium is located is controlled to execute the method for detecting user information as claimed in any of claims 1 to 13.
